# EUROPÄISCHE PATENTANMELDUNG

(11) **EP 4 362 446 A1**
(43) Veröffentlichungstag der Anmeldung: **01.05.2024**
(21) Anmeldenummer: 23207517.6
(22) Anmeldetag: 02.11.2023
(51) Int. Cl.: H04N 1/04, H04N 1/10

(54) **DOKUMENTENPRÜFGERÄT UND ANORDNUNG FÜR EIN SOLCHES**

(30) Priorität: 26.10.2022 DE 102022128392
(71) Anmelder: Bundesdruckerei GmbH, 10969 Berlin (DE)
(72) Erfinder: RABELER, Uwe, 30453 Hannover (DE); THATER, Marcel, 30952 Ronnenberg (DE); HERWIG, Hans-Georg, 30823 Garbsen (DE); FOX, Thomas, 30916 Isernhagen (DE); HESSE, Holger, 30655 Hannover (DE); SCHÜRING, Jan-Ole, 30827 Garbsen (DE); SCHNITKER, Meike, 30161 Hannover (DE); BAUMSCHEIPER, Martin, 31535 Neustadt (DE); STEINMETZ, Krysztof, 28857 Syke (DE); GNADEBERG, Thure, 30453 Hannover (DE)
(74) Vertreter: Hentrich Patent- & Rechtsanwaltspartnerschaft mbB

(57) **Zusammenfassung**

Die Erfindung betrifft eine Anordnung für ein Dokumentenprüfgerät (100) mit einer Anschlagleiste (102) zur Anlage eines zu prüfenden Dokuments und einer lösbar mit der Anschlagleiste (102) koppelbaren Fixiereinrichtung (104) zur Fixierung des zu prüfenden Dokuments. Die Erfindung betrifft außerdem ein Dokumentenprüfgerät (100) mit einer solchen Anordnung.

## Beschreibung

Die Erfindung betrifft eine Anordnung für Dokumentenprüfgerät mit einer Anschlagleiste zur Anlage eines zu prüfenden Dokuments und einer lösbar mit der Anschlagleiste koppelbaren Fixiereinrichtung zur Fixierung des zu prüfendenden Dokuments, insbesondere während das Dokument vom Dokumentenprüfgerät optisch erfasst, mithin geprüft wird. Die Erfindung betrifft außerdem ein entsprechendes Dokumentenprüfgerät mit einer solchen Anordnung.

Bei einem Dokumentenprüfgerät, das zur Prüfung von Dokumenten unterschiedlicher Formate vorgesehen ist, besteht für gewöhnlich eine Schwierigkeit der korrekten Anlage oder Auflage des zu prüfenden Dokuments. Ein Dokumentenprüfgerät ist in der Regel mit einer Glasplatte versehen, auf welche das zu prüfende Dokument aufgelegt oder gegengedrückt wird, sodass eine im Dokumentenprüfgerät innenseitig hinter der Glasplatte angeordnete Kamera in der Lage ist, die aufliegende Seite des Dokuments optisch zu erfassen. In der Regel ist die Kamera wirkungsgemäß mit einem Computer verbunden, der mittels einer Datenbank einen Vergleich des optisch erfassten Dokuments mit in der Datenbank enthaltenen Referenzdaten vornimmt und das Ergebnis des Vergleichs dann auf einer mit dem Computer wirkungsgemäß verbundenen Anzeige ausgibt.

In der DE 10 2016 014 023 B3 wird ein Dokumentenprüfgerät angegeben, das für unterschiedliche Dokumentenformate genutzt werden kann. Hierfür sieht der Deckel eine geeignete Aussparung vor, wobei die Abmessungen der Aussparung einem ersten Dokumentenformat entsprechen. Wird der Deckel angehoben, so steht die Glasplatte vollflächig zur Verfügung und ein Dokument mit einem zweiten Dokumentenformat kann aufgelegt und geprüft werden.

Während des Prüfvorgangs sollte das Dokument selbst nicht bewegt werden, wozu es manchmal erforderlich ist, das Dokument zusätzlich zu fixieren. Ist das Dokument buchförmig, so stellen sich bei fehlender Fixierung beispielsweise die Seiten des Dokuments auf, wodurch das Dokument nicht mehr vollflächig auf der Auflagefläche aufliegt, was die Dokumentenprüfung erschwert oder sogar unmöglich macht. Wenn eine Vielzahl solcher Dokumente geprüft wird, so wird der Nutzer des Dokumentenprüfgeräts jedes zu prüfende Dokument von Hand auf die Dokumentenauflage auflegen und anpressen. Der Nutzer kann also während des Prüfvorgangs keine anderweitigen Aufgaben wahrnehmen. Im Falle von nur einzelnen oder von nur seltenen Dokumentenprüfungen wäre eine separate Fixierung wünschenswert. Eine solche separate Fixierung wird aber im Falle von vielen Dokumentenprüfungen wiederum als störend empfunden.

Es ist die Aufgabe der vorliegenden Erfindung, eine Anordnung für ein Dokumentenprüfgerät und ein Dokumentenprüfgerät anzugeben, die dem vorstehend genannten Nachteil Rechnung tragen.

Diese Aufgabe wird mit einer Anordnung mit den Merkmalen des Anspruchs 1 und mit einem Dokumentenprüfgerät mit den Merkmalen des Anspruchs 10 gelöst. Vorteilhafte Ausgestaltungen mit zweckmäßigen Weiterbildungen sind in den abhängigen Ansprüchen angegeben.

Wie eingangs erwähnt umfasst die erfindungsgemäße Anordnung für ein Dokumentenprüfgerät eine Anschlagleiste zur Anlage eines zu prüfenden Dokuments und eine lösbar mit der Anschlagleiste koppelbare Fixiereinrichtung zur Fixierung des zu prüfenden Dokuments.

Mit dieser Anordnung ist der Vorteil verbunden, dass die Fixiereinrichtung von der Anschlagleiste gelöst werden kann und das Dokumentenprüfgerät auch ohne Fixiereinrichtung nutzbar ist. Die Fixiereinrichtung lässt sich auf einfache Weise auch wieder mit der Anschlagleiste verbinden, sodass ein Nutzer durch die Fixierung in die Lage versetzt ist, das zu prüfende Dokument loszulassen und auch andere Tätigkeiten auszuüben.

Es hat sich als vorteilhaft erwiesen, wenn die Fixiereinrichtung mit der Anschlagleiste über eine lösbare Rastverbindung koppelbar ist, wobei die Eine aus Anschlagleiste und Fixiereinrichtung ein Rastglied umfasst und wobei die Andere aus Anschlagleiste und Fixiereinrichtung eine Rastaufnahme zur Aufnahme des Rastglieds umfasst. Die Nutzung einer Rasteinrichtung bietet den Vorteil, dass sich die Fixiereinrichtung mit der Anschlagleiste positionsgetreu koppeln lässt und sich nicht auf unerwünschte Weise von der Anschlagleiste entkoppelt.

Um die Fixiereinrichtung fest und zuverlässig, aber dennoch lösbar, mit der Anschlagleiste verbinden zu können, hat es sich als vorteilhaft erwiesen, wenn die Fixiereinrichtung mit der Anschlagleiste mittels mindestens zwei lösbaren Rastverbindungen koppelbar ist.

Es ist die Möglichkeit gegeben, dass das Rastglied aus einer mit mindestens einem Knick versehenen elastischen Zunge gebildet ist, die zur Lösung der Kopplung durch Betätigung eines Druckpunkts an der Zunge oder an einem anderen Teil der Fixiereinrichtung elastisch deformierbar ist. Die Zunge kann dabei genutzt werden, um in die Rastaufnahme eingeführt zu werden, wobei der Knick an der Zunge eine Sicherung der Zunge in der Rastaufnahme bewirkt.

Um die Kopplung zwischen der Anschlagleiste und der Fixiereinrichtung zu verbessern, hat es sich in diesem Zusammenhang als vorteilhaft erwiesen, wenn die Rastaufnahme einen Rastsitz zur Aufnahme des Knicks der elastischen Zunge umfasst.

Die Handhabung der Fixiereinrichtung gegenüber der Anschlagleiste ist verbessert, wenn das auf den Knick bezogene distale Ende der Zunge eingerichtet ist, um eine Rückstellkraft derart auszuüben, so dass die Zunge selbst als ein Auswerfer gebildet ist, wenn der Druckpunkt betätigt wird. Mit anderen Worten stellt die elastische Zunge also selbst eine Rückstellkraft in einer dem Lösen der Rastverbindung entsprechenden Richtung bereit. Dies erleichtert das Entkoppeln der Fixiereinrichtung von der Anschlagleiste. Diese Rückstellkraft lässt sich durch eine geignete Neigung der beiden Flanken der Zunge bewirken, die durch den Knick separiert werden.

Eine passgenaue Anordnung der Fixiereinrichtung bezüglich der Anschlagleiste lässt sich dadurch realisieren, dass die Fixiereinrichtung einen Anschlag umfasst, der in einem gekoppelten Zustand, in welchen die Fixiereinrichtung mit der Anschlagleiste gekoppelt ist, an der Anschlagleiste abgestützt ist.

Die Fixiereinrichtung lässt sich mit der Anschlagleiste noch schneller koppeln, wenn die Anschlagleiste einstückig mit einer Führungsleiste gebildet ist, welche für die Fixiereinrichtung eine Führung beim Koppeln mit der Anschlagleiste bereitstellt. Die Führungsleiste kann dabei zugleich ebenfalls als Dokumentenanschlag genutzt werden, wie es auch für die Anschlagleiste der Fall ist.

Wenn die Fixiereinrichtung an der Anschlagleiste verbleibt und mehrere Dokumente geprüft werden müssen, hat es sich als vorteilhaft erwiesen, wenn die Fixiereinrichtung an ihrer der Anschlagleiste abgewandten Seite mit mindestens einer Einführlasche für das zu prüfende Dokument gebildet ist. Diese Einführlasche erleichtert das Einführen neuer Dokumente zwischen der Glasplatte bzw. der Auflagefläche des Dokumentenprüfgeräts und der Fixiereinrichtung.

Die in Verbindung mit der erfindungsgemäßen Anordnung erläuterten Vorteile, vorteilhaften Ausgestaltungen und Wirkungen gelten im gleichem Maße für das erfindungsgemäße Dokumentenprüfgerät mit einer planaren Dokumentenauflage, der eine vorstehend erläuterte Anordnung zugeordnet ist.

Damit das Dokument während des Prüfvorgangs besonders sicher positioniert ist, hat es sich als vorteilhaft erwiesen, wenn von der Fixiereinrichtung im gekoppelten Zustand, in welchem die Fixiereinrichtung mit der Anschlagleiste gekoppelt ist, eine senkrecht bezüglich der Dokumentenauflage ausgerichtete Rückstellkraft derart ausübt, dass ein zu prüfendes Dokument an die Dokumentenauflage gepresst wird.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnung. Dabei zeigen:
- Fig. 1: eine perspektivische Ansicht auf ein Dokumentenprüfgerät mit einer Anordnung aus einer Anschlagleiste und einer Fixiereinrichtung im nichtgekoppelten Zustand,
- Fig. 2: eine perspektivische Ansicht auf das Dokumentenprüfgerät aus Figur 1, bei der sich die Anschlagleiste und die Fixiereinrichtung fast im gekoppelten Zustand befinden, und
- Fig. 3: eine detaillierte Schnittansicht auf eine der Rastverbindungen zwischen der Anschlagleiste und der Fixiereinrichtung, wenn sich die Anordnung im gekoppelten Zustand befindet.

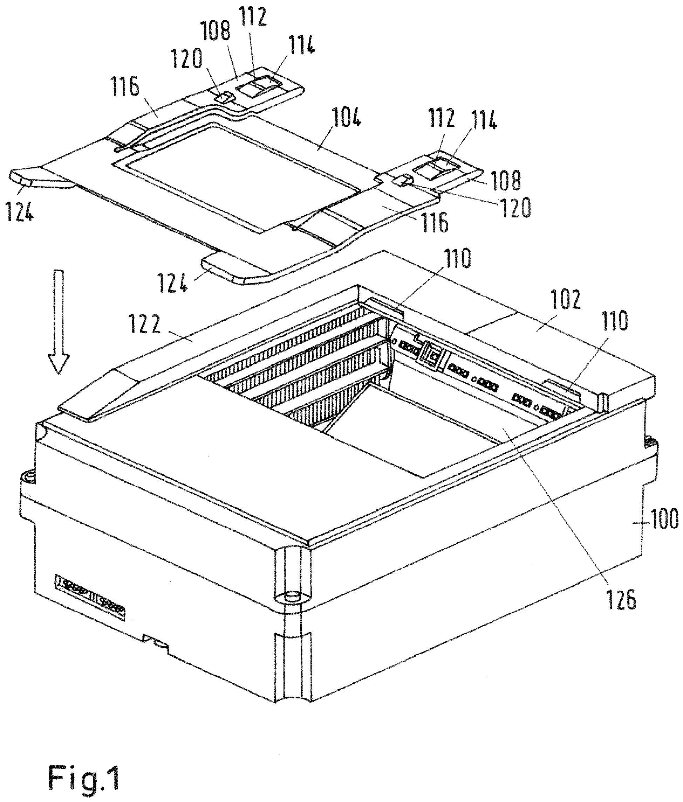

In Figur 1 ist ein Dokumentenprüfgerät 100 mit einer Anordnung aus einer Anschlagleiste 102 und einer Fixiereinrichtung 104 gezeigt, wobei die Anschlagleiste 102 und die Fixiereinrichtung 104 hier nicht gekoppelt gezeigt sind. Die Anschlagleiste 102 dient der Anlage eines zu prüfenden Dokuments, wobei die Fixiereinrichtung 104 der Fixierung des zu prüfenden Dokuments an einer Dokumentenauflage 126 des Dokumentenprüfgeräts 100 dient. Die Anschlagleiste 102 ist vorliegend dem Dokumentenprüfgerät 100 selbst zugeordnet und fest mit diesem verbunden. Von der Anschlagleiste 102 erstreckt sich senkrecht eine Führungsleiste 122, die ebenfalls als Dokumentenanschlag genutzt werden kann. Erfindungsgemäß ist es vorgesehen, dass die Fixiereinrichtung 104 zur Fixierung des zu prüfenden Dokuments lösbar mit der Anschlagleiste 102 koppelbar ist.

Vorliegend sind dafür zwei lösbare Rastverbindungen 106 vorgesehen. Die Anschlagleiste 102 weist hierfür zwei Rastaufnahmen 110 zur Aufnahme jeweils eines Rastgliedes 108 auf, welches an der Fixiereinrichtung 104 vorliegt. Die Rastglieder 108 sind vorliegend aus einer mit einem Knick 112 versehenen elastischen Zunge 114 gebildet, die zur Lösung der Kopplung durch Betätigung eines Druckpunkts 116 an der Fixiereinrichtung 104 elastisch deformiert war sind.

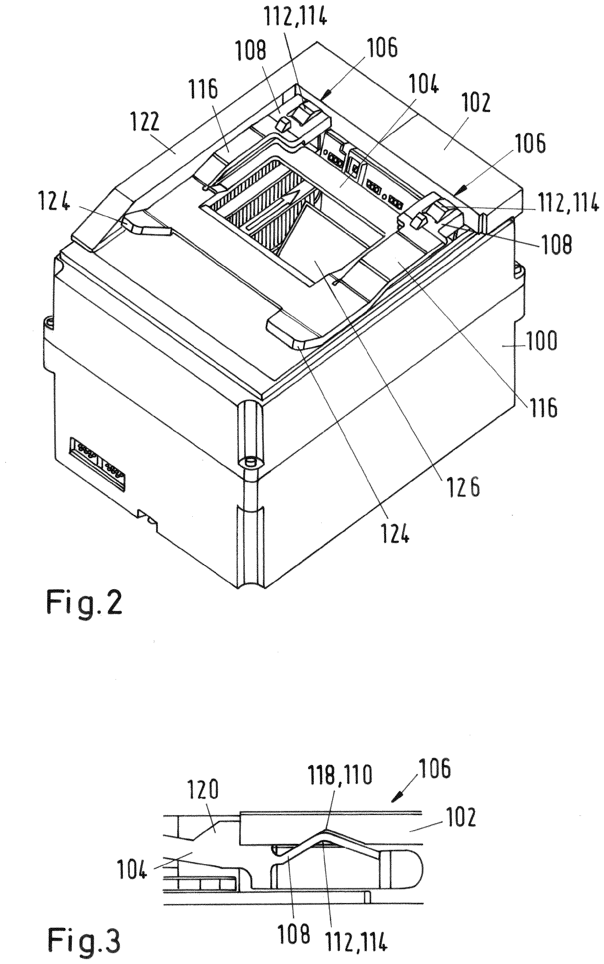

Soll die Fixiereinrichtung 104 mit der Anschlagleiste 102 lösbar gekoppelt werden, so wird - wie in Figur 1 angedeutet - die Fixiereinrichtung 104 auf die Dokumentenauflage 126, mithin auf die Glasplatte abgesenkt. Die Führungsleiste 122 dient dabei als Führung für die Fixiereinrichtung 104, wenn diese mit ihren Rastgliedern 108 auf die Rastaufnahmen 110 in der Anschlagleiste 102 zubewegt werden, wie dies dann in Figur 2 zu erkennen ist.

In Figur 3 ist eine Detailansicht der Rastverbindung 106 im gekoppelten Zustand gezeigt, in welchem die Fixiereinrichtung 104 mit der Anschlagleiste 102 gekoppelt ist. Hierbei ist zu erkennen, dass die Rastaufnahmen 110 einen Rastsitz 118 zur Aufnahme des Knicks 112 der elastischen Zunge 114 umfassen. Außerdem ist zu erkennen, dass an der Fixiereinrichtung 104 ein Anschlag 120 vorhanden ist, der in dem gekoppelten Zustand an der Anschlagleiste 102 abgestützt ist. Dies ermöglicht einen sicheren Sitz der Fixiereinrichtung 104 bezüglich der Anschlagleiste 102. Von der Fixiereinrichtung 104 wird in diesem gekoppelten Zustand eine senkrecht bezüglich der Dokumentenauflage 126 ausgerichtete Rückstellkraft derart ausgeübt, dass ein zu prüfendes Dokument an die Dokumentenauflage 126 gepresst wird.

Um die Kopplung wieder zu lösen, muss ein Benutzer den Druckpunkt 116 betätigen, wodurch sich die Zunge 114 elastisch deformiert und somit die Fixiereinrichtung 104 von der Anschlagleiste 102 gelöst wird. Aufgrund der Formgebung der Zunge 114 mit ihren beiden Flanken, die vom Knick 112 getrennt sind, übt sie selbst eine Rückstellkraft derart aus, dass die Zunge 114 selbst als eine Art "Auswerfer" für die Fixiereinrichtung 104 gebildet ist, wenn der Druckpunkt 116 betätigt wird.

Im Ergebnis zeichnet sich die vorliegende Erfindung durch eine besonders einfache Handhabung zur Verbindung der Fixiereinrichtung 104 zur Fixierung des zu prüfenden Dokuments mit einer Anschlagleiste 102 des Dokumentenprüfgeräts 100 aus.

### BEZUGSZEICHENLISTE

- 100: Dokumentenprüfgerät
- 102: Anschlagleiste (Dokumentenanschlag)
- 104: Fixiereinrichtung
- 106: Rastverbindung
- 108: Rastglied
- 110: Rastaufnahme
- 112: Knick
- 114: Zunge
- 116: Druckpunkt
- 118: Rastsitz
- 120: Anschlag
- 122: Führungsleiste (Dokumentanschlag)
- 124: Einführlasche
- 126: Dokumentenauflage

## Patentansprüche

1. Anordnung für ein Dokumentenprüfgerät (100) mit einer Anschlagleiste (102) zur Anlage eines zu prüfenden Dokuments und einer lösbar mit der Anschlagleiste (102) koppelbaren Fixiereinrichtung (104) zur Fixierung des zu prüfenden Dokuments.

2. Anordnung nach Anspruch 1, **dadurch gekennzeichnet, dass** die Fixiereinrichtung (104) mit der Anschlagleiste (102) über eine lösbare Rastverbindung (106) koppelbar ist, wobei die Eine aus Anschlagleiste (102) und Fixiereinrichtung (104) ein Rastglied (108) umfasst, und wobei die Andere aus Anschlagleiste (102) und Fixiereinrichtung (104) eine Rastaufnahme (110) zur Aufnahme des Rastglieds (108) umfasst.

3. Anordnung nach Anspruch 2, **dadurch gekennzeichnet, dass** die Fixiereinrichtung (104) mit der Anschlagleiste (102) mittels mindestens zwei lösbaren Rastverbindungen (106) koppelbar ist.

4. Anordnung nach Anspruch 2 oder 3, **dadurch gekennzeichnet, dass** das Rastglied (108) aus einer mit mindestens einem Knick (112) versehenen elastischen Zunge (114) gebildet ist, die zur Lösung der Kopplung durch Betätigung eines Druckpunkts (116) elastisch deformierbar ist.

5. Anordnung nach Anspruch 4, **dadurch gekennzeichnet, dass** die Rastaufnahme (110) einen Rastsitz (118) zur Aufnahme des Knicks (112) der elastischen Zunge (114) umfasst.

6. Anordnung nach Anspruch 4 oder 5, **dadurch gekennzeichnet, dass** das auf den Knick (112) bezogene distale Ende der Zunge (114) eingerichtet ist, um eine Rückstellkraft derart auszuüben, so dass die Zunge (114) als Auswerfer gebildet ist, wenn der Druckpunkt (116) betätigt wird.

7. Anordnung nach einem der Ansprüche 1 bis 6, **dadurch gekennzeichnet, dass** die Fixiereinrichtung (104) einen Anschlag (120) umfasst, der in einem gekoppelten Zustand, in welchem die Fixiereinrichtung (104) mit der Anschlagleiste (102) gekoppelt ist, an der Anschlagleiste (102) abgestützt ist.

8. Anordnung nach einem der Ansprüche 1 bis 7, **dadurch gekennzeichnet, dass** die Anschlagleiste (102) einstückig mit einer Führungsleiste (122) gebildet ist, welche für die Fixiereinrichtung (104) eine Führung beim Koppeln mit der Anschlagleiste (102) bereitstellt.

9. Anordnung nach einem der Ansprüche 1 bis 8, **dadurch gekennzeichnet, dass** die Fixiereinrichtung (104) an ihrer der Anschlagleiste (102) abgewandten Seite mit mindestens einer Einführlasche (124) für das zu prüfende Dokument gebildet ist.

10. Dokumentenprüfgerat (100) mit einer planaren Dokumentenauflage (126), der eine Anordnung nach einem der Ansprüche 1 bis 9 zugeordnet ist.
